# EUROPEAN PATENT APPLICATION

(11) **EP 3 597 881 A1**
(43) Date of publication of application: **22.01.2020**
(21) Application number: 18768662.1
(22) Date of filing: 19.03.2018
(51) Int. Cl.: F01P 5/12, F04D 15/00, F04D 13/06, F01P 7/16, H02K 41/035, H02K 1/26, H02K 1/16, F01P 7/14

(54) **WATER PUMP**

(30) Priority: 17.03.2017 KR 20170033834
(71) Applicant: Myung HWA Ind. Co., Ltd., Seoul 08524 (KR)
(72) Inventor: WON, Yu Man, Suwon-si, Gyeonggi-do 16385 (KR)
(74) Representative: Roos, Peter
(86) International application number: PCT/KR2018/003174
(87) International publication number: WO 2018/169377

(57) **Abstract**

Provided is a water pump including: a body portion including a housing where an inlet port and a discharge port through which cooling water is introduced and discharged are provided, an impeller accommodated inside the housing and introducing or discharging the cooling water via rotation, a rotation shaft coupled to the impeller and rotating the impeller by receiving external driving power, and a cooling water flow rate control unit arranged above the impeller and operating to selectively open or close the discharge port; a cylinder portion provided above the cooling water flow rate control unit and formed therein a hydraulic space accommodating cooling water that applies pressure to the cooling water flow rate control unit; and a linear motor coupled to a side surface of the cylinder portion and selectively applying pressure to the cooling water accommodated inside the hydraulic space by operating to convert rotational motion to linear motion to adjust an amount of the cooling water discharged from the body portion.

According to the water pump of the present disclosure, a structure may be simple, friction and noise between internal components may be prevented, and a flow rate of discharged cooling water may be adjusted.

## Description

### TECHNICAL FIELD

The present disclosure relates to a water pump, and more particularly, to a water pump that cools an engine by applying pressure to introduced cooling water to circulate inside the engine.

### BACKGROUND ART

In general, a water pump denotes a pump that cools an electronic component inside a vehicle by forcibly circulating cooling water inside an engine. A machine that obtains power by using an explosive force of fuel, such as an engine of an automobile, generates high temperature heat during operation. When the high temperature heat is not suitably controlled, not only the engine itself but also another adjacent machine are adversely affected. Accordingly, cooling water is inevitably used to cool such heat.

As a technology related to such a water pump, there are a mechanical water pump operating by receiving a part of engine power, a clutch type water pump including a clutch that selectively blocks engine power transmitted to a water pump impeller, and a variable water pump (WO 2016-012378 A1) including a separate magnet and position sensor for controlling a flow rate of cooling water.

Since a conventional mechanical pump is always driven by engine power, engine is cooled even when there is no need to cool the engine, such as when the engine is being started, and thus an engine efficiency and a cooling efficiency are reduced.

Also, in a conventional clutch type water pump, friction and noise are generated due to coupling of a clutch and a friction portion with an operation of an electromagnet.

Further, since a conventional variable water pump uses a separate component for controlling a flow rate, a structure of the water pump becomes complicated and price of the product is increased.

### DESCRIPTION OF EMBODIMENTS

### TECHNICAL PROBLEM

The present disclosure is directed to providing a water pump improved such that a structure is simple, friction and noise between internal components are prevented, and a flow rate of discharged cooling water is adjustable.

### SOLUTION TO PROBLEM

According to an aspect of the present disclosure, a water pump includes: a body portion including a housing where an inlet port and a discharge port through which cooling water is introduced and discharged are provided, an impeller accommodated inside the housing and introducing or discharging the cooling water via rotation, a rotation shaft coupled to the impeller and rotating the impeller by receiving external driving power, and a cooling water flow rate control unit arranged above the impeller and operating to selectively open or close the discharge port; a cylinder portion provided above the cooling water flow rate control unit and formed therein a hydraulic space accommodating cooling water that applies pressure to the cooling water flow rate control unit; and a linear motor coupled to a side surface of the cylinder portion and selectively applying pressure to the cooling water accommodated inside the hydraulic space by operating to convert rotational motion to linear motion to adjust an amount of the cooling water discharged from the body portion.

The linear motor may include: a piston located inside the hydraulic space and applying pressure to the cooling water present inside the hydraulic space; a linear shaft coupled to the piston and moving the piston inside the hydraulic space; a rotor coupled to a thread formed on an outer surface of the linear shaft and moving the linear shaft forward and backward via rotation; a stator arranged to surround the rotor and rotating the rotor; and a motor casing accommodating the linear shaft, the rotor, and the stator therein.

The stator may be a permanent magnet, and the rotor may include a slot wound by a coil and be rotated by a magnetic action with the stator.

The stator may include a slot wound by a coil, and the rotor may be a permanent magnet and rotated by a magnetic action with the stator.

The cooling water flow rate control unit may include: an impeller cover arranged above the impeller, formed in a cylinder shape of which an end portion facing the impeller is opened, and operating such that a side surface selectively opens or closes the discharge port; a chamber cover arranged above the impeller cover, having a pressurizing space communicating with the hydraulic space therein, and applying pressure to the impeller cover through the cooling water introduced to the pressurizing space; and a pressurizing member arranged in a pressurizing space between the impeller cover and the chamber cover to seal a gap between the impeller cover and the chamber cover, and transmitting the pressure applied by the cooling water introduced to the pressurizing space to the impeller cover.

The cooling water flow rate control unit may further include an elastic member arranged between the impeller cover and the impeller and applying an elastic restoring force to the impeller cover towards the pressurizing space

The body portion may further include a check valve accommodated inside the housing to face a cooling water flow hole of which one end is connected to the cylinder portion and the other end is provided at the impeller cover, and preventing the cooling water from being introduced from the cylinder portion to the body portion by being closed when the piston moves in a direction towards the body portion.

The check valve may include: a valve cylinder having therein a flow path communicating the body portion and the cylinder portion; a latching protrusion protruding from an inner surface of the valve cylinder; and a sealing ball located on the flow path and closing the flow path by being caught at the latching protrusion by the cooling water flowing from the cylinder portion to the body portion.

### ADVANTAGEOUS EFFECTS OF DISCLOSURE

According to a water pump of the present disclosure, a structure may be simple, friction and noise between internal components may be prevented, and a flow rate of discharged cooling water may be adjusted.

### BRIEF DESCRIPTION OF DRAWINGS

FIG. 1 is a cross-sectional view illustrating a state in which a discharge port of a water pump according to an embodiment of the present disclosure is closed.
FIG. 2 is a cross-sectional view illustrating a state in which a check valve of a water pump according to an embodiment of the present disclosure is closed.
FIG. 3 is a cross-sectional view illustrating a state in which a discharge port of a water pump according to an embodiment of the present disclosure is opened.
FIG. 4 is a cross-sectional view illustrating a state in which a check valve of a water pump according to an embodiment of the present disclosure is opened.

### BEST MODE

While the present disclosure has been particularly shown and described with reference to exemplary embodiments thereof, it will be understood by those of ordinary skill in the art that various changes in form and details may be made therein. Thus, the true scope of the present disclosure should be determined by technical ideas of the following claims.

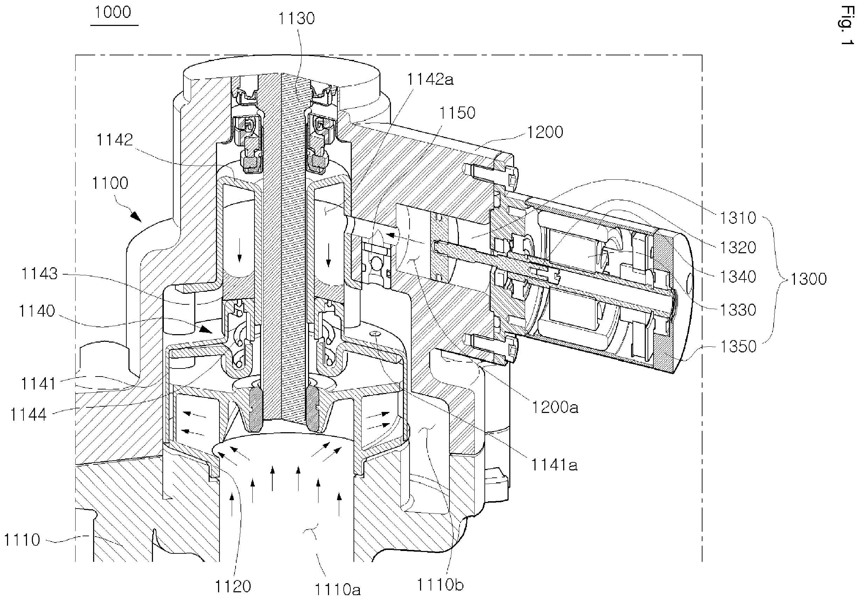

Referring to FIG. 1, a water pump 1000 according to an embodiment of the present disclosure includes a body portion 1100, a cylinder portion 1200, and a linear motor 1300.

Also, the body portion 1100 includes a housing 1110, an impeller 1120, a rotation shaft 1130, and a cooling water flow rate control unit 1140.

The housing 1110 includes an inlet port 1110a into which cooling water is introduced and a discharge port 1110b through which the introduced cooling water is discharged. The housing 1110 accommodates therein the impeller 1120, the rotation shaft 1130, and the cooling water flow rate control unit 1140 and is provided at a certain region of a vehicle engine.

The impeller 1120 introduces and discharges the cooling water via rotation. A technology about the impeller 1120 is well known and thus details thereof are omitted.

The rotation shaft 1130 is coupled to the impeller 1120 and rotates the impeller 1120 by receiving driving power from the outside. The rotation shaft 1130 may receive the driving power from a driving motor (not shown) or receive power of the vehicle engine via a power transmitting unit such as a pulley (not shown), but is not limited thereto.

The cooling water flow rate control unit 1140 is arranged above the impeller 1120 and operates to selectively open or close the discharge port 1110b.

In particular, the cooling water flow rate control unit 1140 may include an impeller cover 1141, a chamber cover 1142, a pressurizing member 1143, and an elastic member 1144.

The impeller cover 1141 is arranged above the impeller 1120 and an end portion facing the impeller 1120 is formed in an opened cylinder shape. In other words, the impeller cover 1141 is formed to surround an outer circumferential surface of the impeller 1120.

In this case, the impeller cover 1141 operates to ascend or descend inside the housing 1110 such that a side surface of the impeller cover 1141 selectively opens or closes the discharge port 1110b provided at the housing 1110 and accordingly, the cooling water compressed by being introduced to the impeller 1120 is selectively prevented from being discharged to the discharge port 1110b.

The chamber cover 1142 is arranged above the impeller cover 1141 and provides a pressurizing space 1142a communicating with a hydraulic space 1200a described later between the chamber cover 1142 and the impeller cover 1141. The cooling water present inside the hydraulic space is introduced to the pressurizing space 1142a, and the cooling water introduced to the pressurizing space 1142a pressurizes the impeller cover 1141.

The pressurizing member 1143 is provided in the pressurizing space 1142a between the impeller cover 1141 and the chamber cover 1142 to seal a gap between the impeller cover 1141 and the chamber cover 1142. At the same time, the pressurizing member 1143 transfers the pressure applied to the pressurizing member 1143 by the cooling water introduced to the pressurizing space 1142a to the impeller cover 1141. Accordingly, the impeller cover 1141 may move downward.

The elastic member 1144 is provided between the impeller cover 1141 and the impeller 1120, and applies an elastic restoring force to the impeller cover 1141 towards the pressurizing space 1142a. Accordingly, the impeller cover 1141 that moved downward may return upward. In FIG. 1, the elastic member 1144 is shown as a coil-shaped spring, but this is only an embodiment of the present disclosure and a material and shape of the elastic member 1144 may vary.

The cylinder portion 1200 is provided above the cooling water flow rate control unit 1140 and the hydraulic space 1200a accommodating the cooling water that applies the pressure to the cooling water flow rate control unit 1140 is provided therein. The cylinder portion 1200 is a medium that connects the body portion 1100 and the linear motor 1300 described later, and enables a flow rate of the cooling water discharged from the body portion 1100 by the linear motor 1300 to be adjusted.

The linear motor 1300 is coupled to a side surface of the cylinder portion 1200 and operates to covert rotational motion to linear motion to selectively apply pressure to the cooling water accommodated inside the hydraulic space 1200a, thereby adjusting an amount of the cooling water discharged form the body portion 1100.

In particular, the linear motor 1300 may include a piston 1310, a linear shaft 1320, a rotor 1330, a stator 1340, and a motor casing 1350.

The piston 1310 is located inside the hydraulic space 1200a and applies pressure to the cooling water present inside the hydraulic space 1200a. Accordingly, the cooling water inside the hydraulic space 1200a may be introduced to the pressurizing space 1142a or pressure may be applied to the cooling water present inside the pressuring space 1142a.

The linear shaft 1320 is coupled to the piston 1310 and moves the piston 1310 inside the hydraulic space 1200a. The rotor 1330 is coupled to a thread (not shown) provided on an outer surface of the linear shaft 1320 and moves the linear shaft 1320 back and forth by rotation.

This is the same principle as moving a bolt forward or backward when the bolt is coupled to a fixed nut and rotates, and the linear shaft 1320 moves forward or backward as a thread (not shown) provided on the rotor 1330 and the thread provided on the linear shaft 1320 are engaged with each other when the rotor 1330 rotates while being fixed at the same spot. Accordingly, the piston 1310 moves back and forth inside the hydraulic space 1200a together with the linear shaft 1320.

The stator 1340 is arranged to surround the rotor 1330 and rotates the rotor 1330. Here, the stator 1340 may be a permanent magnet and the rotor 1330 may be a slot wound by a coil. Alternatively, the stator 1340 may be a slot wound by a coil and the rotor 1330 may be a permanent magnet.

In the former case, when a current is applied to the rotor 1330, the rotor 1330 is magnetized and the rotor 1330 rotates through a magnetic action with the stator 1340 that is a permanent magnet. In the latter case, when a current is applied to the stator 1340, the stator 1340 is magnetized and rotates the rotor 1330 through a magnetic action with the rotor 1330 that is a permanent magnet. However, this is only an embodiment of the present disclosure and types and structures of the rotor 1330 and stator 1340 may vary.

The motor casing 1350 accommodates the linear shaft 1320, the rotor 1330, and the stator 1340 therein. The motor casing 1350 may also accommodate a brush (not shown) or a rectifier (not shown) required for driving of a motor therein, but is not limited thereto.

The body portion 1100 may further include a check valve 1150 accommodated inside the housing 1110 while facing a cooling flow hole 1141a of which one end is connected to the cylinder portion 1200 and the other end is provided at the impeller cover 1141. The check valve 1150 is closed when the piston 1310 moves in a direction towards the body portion 1100 and prevents the cooling water from being introduced from the cylinder portion 1200 to the body portion 1100.

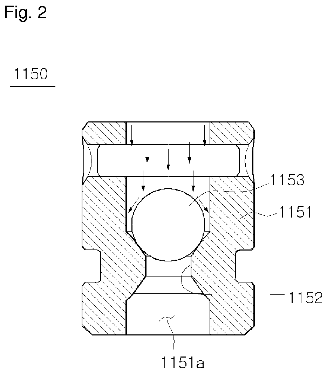

In particular, referring to FIG. 2, the check valve 1150 may include a valve cylinder 1151, a latching protrusion 1152, and a sealing ball 1153.

The valve cylinder 1151 has a hollow cylindrical shape and a flow path 1151 a communicating the body portion 1100 and the cylinder portion 1200 is provided therein. The cooling water may flow through the flow path 1151a.

The latching protrusion 1152 protrudes inward from an inner surface of the valve cylinder 1151. A protruding shape may vary and is not limited to that shown in FIG. 2.

The sealing ball 1153 is located at the flow path 1151a and may prevent the cooling water from flowing through the flow path 1151a by being caught at the latching protrusion 1152 by the cooling water moving from the cylinder portion 1200 to the body portion 1100 thereby closing the flow path 1151a. The sealing ball 1153 may have a sphere shape but is not limited thereto.

Hereinafter, a process of controlling a flow rate of cooling water discharged from the water pump 1000 according to an embodiment of the present disclosure will be described in detail.

When an operation of an engine is started, the impeller 1120 operates by receiving a rotational force of the engine and accordingly, a small amount of cooling water may be introduced into the body portion 1100 of the water pump 1000. During an initial operation of the engine, supply of cooling water to the engine may be stopped for fast warm-up of the engine.

Referring to FIG. 1, a temperature sensor (not shown) that measures a temperature of the engine outputs a predetermined signal and transmits the signal to a motor control unit (not shown). Then, when the motor control unit applies a current to the linear motor 1300 based on the signal, the rotor 1330 moves the piston 1310 towards the pressurizing space 1142a via rotation.

According to movement of the piston 1310, some of the cooling water inside the hydraulic space 1200a is introduced into the check valve 1150. In this case, as shown in FIG. 2, the sealing ball 1153 is caught at the latching protrusion 1152 by pressure applied by the cooling water inside the hydraulic space 1200a. Accordingly, the sealing ball 1153 closes the flow path 1151a and movement of the cooling water through the flow path 1151a is not realized.

The remaining cooling water is introduced to the pressurizing space 1142a or applies pressure to the cooling water already present in the pressurizing space 1142a. In this case, the cooling water inside the pressurizing space 1142a applies pressure to the impeller cover 1141 through the pressurizing member 1143 and the impeller cover 1141 moves downward to close the discharge port 1110b.

Here, the motor control unit may adjust a degree of the impeller cover 1141 closing the discharge port 1110b, according to the temperature of the engine measured by the temperature sensor. In other words, when the temperature of the engine is high, the motor control unit moves the piston 1310 slightly or not at all, and the pressure applied to the cooling water at this time is not large, and thus the impeller cover 1141 moves downward only slightly. Accordingly, the impeller cover 1141 closes only a small part of the discharge port 1110b or does not close the discharge port 1110b, and the amount of the cooling water discharged from the water pump 1000 is maximized, and thus the engine may be smoothly cooled.

On the other hand, when the temperature of the engine is not high or the engine is initially started, the motor control unit moves the piston 1310 a lot and the pressure applied to the cooling water at this time is increased, and thus the impeller cover 1141 is moved downward a lot. Accordingly, the impeller cover 1141 closes most or all of the discharge port 111 0b and the cooling water is not discharged from the water pump 1000.

Then, when the engine is warmed up to a certain level by a continuous operation of the engine, the closed discharge port 111 0b needs to be opened again.

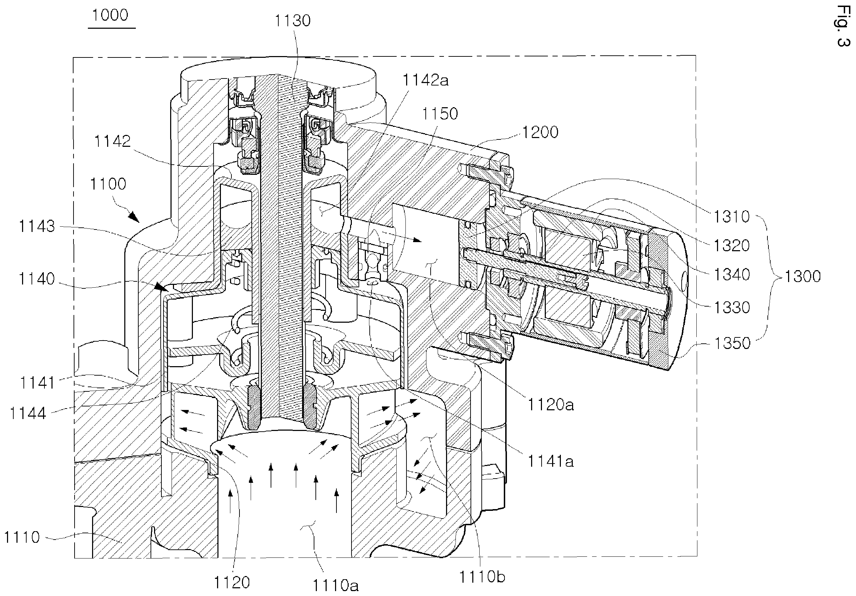

Referring to FIG. 3, the motor control unit that received a signal from the temperature sensor controls the linear motor 1300 to move the piston 1310 in a direction away from the body portion 1100. In this case, a space of the hydraulic space 1200a is increased and some of the cooling water inside the pressurizing space 1142a is introduced towards the hydraulic space 1200a, and accordingly, the pressure applied to the impeller cover 1141 by the cooling water inside the pressurizing space 1142a is reduced.

Accordingly, the elastic restoring force applied by the elastic member 1144 to the bottom of the impeller cover 1141 becomes larger than a force applied to the top of the impeller cover 1141 by the cooling water inside the pressurizing space 1142a, and the discharge port 1110b is opened as the impeller cover 1141 moves upward.

Meanwhile, the hydraulic space 1200a is filled with the cooling water, but the cooling water of the hydraulic space 1200a may become insufficient due to leakage of the cooling water through a gap between components. In this case, the check valve 1150 may be opened and the cooling water may be supplied into the hydraulic space 1200a.

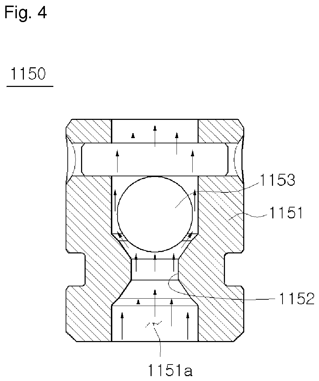

Referring to FIG. 4, when the cooling water flowing through the cooling water flow hole 1141a applies the pressure to the bottom of the sealing ball 1153, the sealing ball 1153 is separated from the latching protrusion 1152 and thus the flow path 1151a may be opened. Accordingly, the cooling water introduced to the flow path 1151a through the bottom of the sealing ball 1153 may be filled in the hydraulic space 1200a.

## Claims

1. A water pump comprising:
a body portion comprising a housing where an inlet port and a discharge port through which cooling water is introduced and discharged are provided, an impeller accommodated inside the housing and introducing or discharging the cooling water via rotation, a rotation shaft coupled to the impeller and rotating the impeller by receiving external driving power, and a cooling water flow rate control unit arranged above the impeller and operating to selectively open or close the discharge port;
a cylinder portion provided above the cooling water flow rate control unit and formed therein a hydraulic space accommodating cooling water that applies pressure to the cooling water flow rate control unit; and
a linear motor coupled to a side surface of the cylinder portion and selectively applying pressure to the cooling water accommodated inside the hydraulic space by operating to convert rotational motion to linear motion to adjust an amount of the cooling water discharged from the body portion.

2. The water pump of claim 1, wherein the linear motor comprises:
a piston located inside the hydraulic space and applying pressure to the cooling water present inside the hydraulic space;
a linear shaft coupled to the piston and moving the piston inside the hydraulic space;
a rotor coupled to a thread formed on an outer surface of the linear shaft and moving the linear shaft forward and backward via rotation;
a stator arranged to surround the rotor and rotating the rotor; and
a motor casing accommodating the linear shaft, the rotor, and the stator therein.

3. The water pump of claim 2, wherein the stator is a permanent magnet, and
the rotor comprises a slot wound by a coil and is rotated by a magnetic action with the stator.

4. The water pump of claim 2, wherein the stator comprises a slot wound by a coil, and
the rotor is a permanent magnet and is rotated by a magnetic action with the stator.

5. The water pump of any one of claims 2 to 4, wherein the cooling water flow rate control unit comprises:
an impeller cover arranged above the impeller, formed in a cylinder shape of which an end portion facing the impeller is opened, and operating such that a side surface selectively opens or closes the discharge port;
a chamber cover arranged above the impeller cover, having a pressurizing space communicating with the hydraulic space therein, and applying pressure to the impeller cover through the cooling water introduced to the pressurizing space; and
a pressurizing member arranged in a pressurizing space between the impeller cover and the chamber cover to seal a gap between the impeller cover and the chamber cover, and transmitting the pressure applied by the cooling water introduced to the pressurizing space to the impeller cover.

6. The water pump of claim 5, wherein the cooling water flow rate control unit further comprises an elastic member arranged between the impeller cover and the impeller and applying an elastic restoring force to the impeller cover towards the pressurizing space

7. The water pump of claim 5, wherein the body portion further comprises a check valve accommodated inside the housing to face a cooling water flow hole of which one end is connected to the cylinder portion and the other end is provided at the impeller cover, and preventing the cooling water from being introduced from the cylinder portion to the body portion by being closed when the piston moves in a direction towards the body portion.

8. The water pump of claim 7, wherein the check valve comprises:
a valve cylinder having therein a flow path communicating the body portion and the cylinder portion;
a latching protrusion protruding from an inner surface of the valve cylinder; and
a sealing ball located on the flow path and closing the flow path by being caught at the latching protrusion by the cooling water flowing from the cylinder portion to the body portion.
